# EUROPEAN PATENT SPECIFICATION

(11) **EP 4 299 489 B1**
(45) Date of publication and mention of the grant of the patent: **03.06.2026**
(21) Application number: 23180906.2
(22) Date of filing: 22.06.2023
(51) Int. Cl.: B65G 47/08, B65G 47/29, B65G 47/88

(54) **CONVEYOR SYSTEM**
FÖRDERSYSTEM
SYSTÈME DE TRANSPORT

(30) Priority: 29.06.2022 SE 2250810
(43) Date of publication of application: 03.01.2024
(73) Proprietor: FlexLink AB, 415 05 Göteborg (SE)
(72) Inventor: ROBERTSSON, Staffan, 434 36 Kungsbacka (SE); BENSRYD, Max, 416 76 Göteborg (SE)
(74) Representative: Zacco Sweden AB

(56) References cited:
- WO-A1-2020/055310
- US-A- 4 448 300

## Description

### TECHNICAL FIELD

The present invention relates to a conveyor system with a flow control device, which can be used to stop products, to group products, to provide a spacing between products or to let products pass.

### BACKGROUND ART

Conveying devices, such as those that are used for moving objects between different stations in a factory, usually comprise a conveying track in the form of a belt or a chain. The conveying tracks can be recessed in a trench with vertical side surfaces. Alternatively, they can be located on the horizontal upper surfaces of the trench or arranged in some other way. The objects to be conveyed are arranged slidably in relation to the conveying tracks, either directly or via carrying means, which are also known as pallets. A specific type of pallet is a puck, which is a circular pallet adapted for smaller and more lightweight objects.

An object is conveyed along the conveying device, which comprises different workstations. Along the conveyor track, the object may be stopped by a stop member or the like such that an operation may be performed on the object. In some cases, the object may pass a specific work station without an operation being performed on the object. The stop member may for this reason be arranged to either stop the object or to let the object pass the workstation. A stop member may also be arranged along the conveyor track in between workstations in order to stop several objects in a queue. This will provide a buffer which is of advantage e.g. where different workstations have different operating times.

If the conveying device is of a conventional type, in which all workstations are positioned after each other and the operations on the objects are performed synchronous, every object will stop at each workstation. If no operation is to be performed on an object at a specific workstation, the object will have to wait until the operation on the previous object at that workstation is ready, until the object can continue. All objects are in this case released at the same time and moves at the same time. One advantage of such a system is that it is easy to predict the performance of the system. One disadvantage of such a system is that it is not very flexible. If the operating time at a specific workstation is long, all objects will have to wait for that time, even if there is no operation performed on all objects. Thus, such systems are mostly used for a single product or when the differences in the products are small.

In other systems, the operations on the objects are performed asynchronous, i.e. the object stops at a workstation where an operation is to be performed, and is released when the operation is ready. In such systems, a queue comprising a number of objects may thus be required at at least a few of the workstations in order to compensate for the different through-flow times of the objects and for the different operating times at a workstation.

In a normal queue, comprising either objects that stand directly on the conveyor track or objects conveyed by a pallet or a puck, the objects, pallets or pucks are allowed to bump into each other when they reach the end of the queue. This will create an impact on the stop member, especially if the queue is long or if the object is heavy. A pallet or puck may be provided with a damper or resilient member in order to minimize the impact force acting on the stop member, but this technology is only used on pallets or pucks that convey heavy objects. For freestanding objects or light pucks, no additional damping is normally used. Instead, the stop member is designed for the worst-case scenario.

At the same time, there may be a desire to release objects from a stop member in a controlled manner, e.g. in order to provide a predefined spacing between the objects, or to group the objects in groups having a predefined number of objects. For this purpose, stop cylinders and/or screw feeders may be used. One problem with these is the safety aspect. In order to prevent a user to reach a stop cylinder or a screw feeder with e.g. a finger, protective safety covers must be used. Safety covers must be relatively large and long in order to provide the required safety.

There is thus room for improvements.

Patent publication WO 2020/055310 A1 discloses a conveyor system according to the preamble of claim 1. In particular, the document discloses a stop device for a conveyor system comprising a body, a drive unit attached to the body, a shaft member rotationally arranged in the body and a wheel arranged to be driven by the drive unit, where a freewheeling slip clutch is arranged between the wheel and the drive unit.

### DISCLOSURE OF INVENTION

An object of the invention is therefore to provide a conveyor system comprising at least one flow control device. A further object of the invention is to provide a method for controlling the flow of objects.

The invention is defined in claim 1. The solution to the problem according to the invention is described in the characterizing part of claim 1. Claim 10 contains an advantageous method. The other claims contain advantageous embodiments and further developments of the system and the method.

In a conveyor system comprising at least one flow control device, where in the conveyor system objects are conveyed on a conveyor track, the flow control device comprises a body, a drive unit attached to the body, a star wheel, a shaft member of the star wheel rotationally arranged in the body and connected to the drive unit. The star wheel is arranged to be driven by the drive unit, where the star wheel is provided with a number of tips and part-circular recesses arranged between the tips, where a one way bearing is arranged between the star wheel and the drive unit. The object of the invention is achieved in that each tip is provided with a magnetic member and that the flow control device comprises a magnet arranged at the outer periphery of the star wheel, where the magnet is arranged to hold the star wheel in a predefined position by magnetic interaction with the magnetic member.

By the conveyor system with the flow control device according to the invention, a flow control device that can let an object pass, that can stop an object completely, that can release objects with a predefined spacing and that can group objects in a group having a predefined size is provided. At the same time, the flow control device will disengage its driving power if e.g. a finger is caught in the flow control device, which will increase the safety of the flow control device and which will provide the required safety without the need of protective covers. With such a flow control device, a compact flow control device with a passing function, a stop function, a spacing function and a grouping function is obtained. The flow control device can be positioned at almost any position of a conveyor track, and can easily be adjusted in a longitudinal direction along the conveyor track or can be repositioned to a new position if the requirements changes.

The conveyor may be any type of conveyor in which an object of some kind moves from one position to another position. The most common type of conveyor is a conveyor in which objects or pallets are conveyed on an endless belt or chain driven by a motor. The conveyor track is in this case often arranged in a horizontal direction. The flow control device according to the invention is suitable for all kinds of such conveyors.

The function of the flow control device is controlled by the star wheel driven by an electric motor of the drive unit, which in turn is controlled by the control system of the conveyor system. If the motor is stopped completely from running, the flow control device will function as a stop device and an object will be stopped by the star wheel. If the motor drives the shaft member of the star wheel with a speed that corresponds to a peripheral speed of the star wheel that is equal to or higher than the speed of the conveyor track, i.e. the periphery of the star wheel can rotate with a speed equal to or higher than the speed of the conveyor track, the objects will pass the flow control device without being influenced by the flow control device. The speed of the star wheel is here to be understood as the peripheral speed of the star wheel, i.e. when the periphery of the star wheel moves with the same speed as the conveyor track, the speed of the star wheel is said to equal the speed of the conveyor track. If the motor drives the shaft member of the star wheel with a speed that is lower than the conveyor track, the objects will pass the flow control device with the speed of the star wheel, i.e. with a speed that is slower than the speed of the conveyor track. In this way, a spacing between each object is created. If the motor e.g. drives the shaft member of the star wheel with a speed that is half of the speed of the conveyor track, each object will be spaced apart with a distance corresponding to the length of an object.

The flow control device will further reduce the risk of an object being damaged by the flow control device. When a screw feeder is used to space or group objects, each object must enter the screw feeder in a correct way with a proper orientation. If an object is misaligned, the object may be squeezed by the feed cylinder of the screw feeder. If pallets are used, the screw feeder itself may also be damaged by a misaligned pallet. The flow control device is suitable to be used with freestanding objects or with pallets that can carry an object. An object may be circular or may have a symmetric shape, such as a hexagonal or octagonal shape. If a pallet is used, the contact surface for the star wheel should be symmetrical, e.g. circular, but the lower and upper portion of the pallet may have another shape. The star wheel is provided with a number of tips and part-circular recesses arranged between the tips conforming to the shape of the object.

The flow control device is provided with a one way bearing that allows the star wheel to be driven by the drive unit in one direction, and that will allow the star wheel to disengage from the drive unit when the star wheel is stopped and the drive unit continues to rotate, or when the star wheel is pushed in the opposite rotational direction. This will be the case e.g. when the object flow of the conveyor is blocked completely. In this case, the star wheel will disengage from the drive unit and stop rotating while the drive unit continues to rotate. This will also be the case if a user inserts e.g. a finger at the star wheel. The drive unit will not be able to catch the finger and to push it towards e.g. an edge of the conveyor, since the star wheel will disengage from the drive unit. By a normal star wheel installation, where the star wheel is fixedly attached to the drive unit, the finger would be forced towards e.g. an edge that could function as a scissor.

The drive unit is adapted to rotate the shaft member of the star wheel. The drive unit comprises an electric motor that is connected to a reduction gear, to which the shaft member is attached. The reduction gear may be a straight transmission or may be a worm gear. Preferably, a self-locking worm gear is used. The reduction gear is attached to a body of the flow control device in which the shaft member is arranged. Preferably, the shaft member is supported by a roller bearing in the body. The star wheel is arranged at the upper end of the shaft member. Generally, however, the star wheel may be arranged at an upper end portion of the shaft member. More generally, the star wheel may be arranged at any position along the shaft member. In one example, the one way clutch is integrated in a roller bearing, which is referred to as a one way bearing. The one way bearing is mounted on the upper end of the shaft member and the star wheel is mounted on the one way bearing. This gives a compact and reliable solution. It is also possible to mount a one way clutch, e.g. a one way bearing, between the reduction gear and the shaft member. One advantage of using a one way bearing between the shaft member and the star wheel is that the rotating mass is reduced and the friction of the roller bearing supporting the shaft member must not be considered.

### BRIEF DESCRIPTION OF DRAWINGS

The invention will be described in greater detail in the following, with reference to the embodiments that are shown in the attached drawings, in which
- Fig. 1: shows a flow control device arranged on a conveyor beam,
- Fig. 2: shows a flow control device spacing objects,
- Fig. 3: shows a flow control device grouping objects,
- Fig. 4: shows a detail of the flow control device and
- Fig. 5: shows a flowchart of the method for controlling a flow of objects according to the invention.

### MODES FOR CARRYING OUT THE INVENTION

The embodiments of the invention with further developments described in the following are to be regarded only as examples and are in no way to limit the scope of the protection provided by the patent claims. References such as longitudinal, horizontal, vertical, right, left etc. refer to directions of a conveyor in normal use.

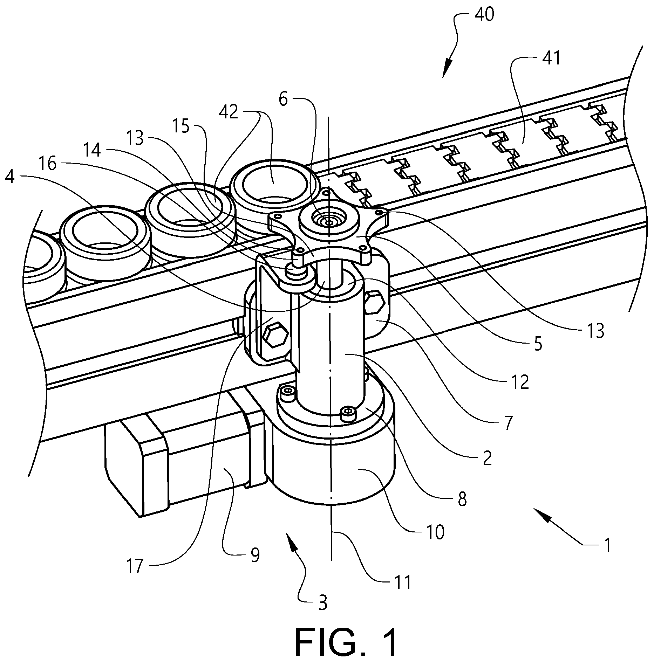

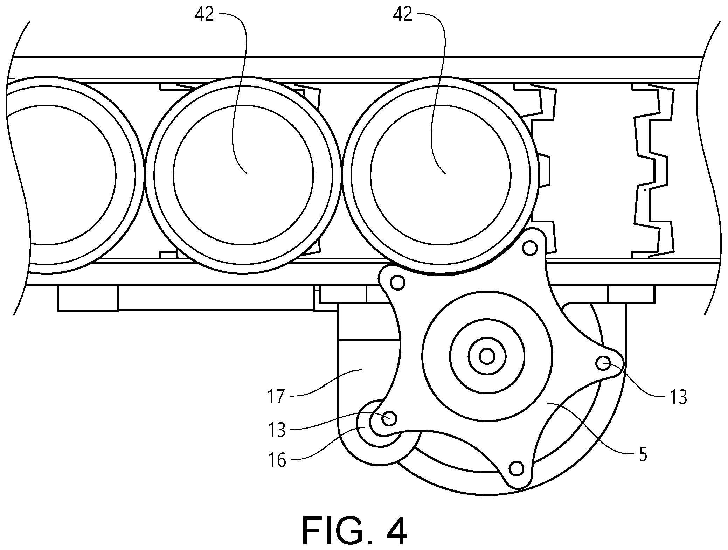

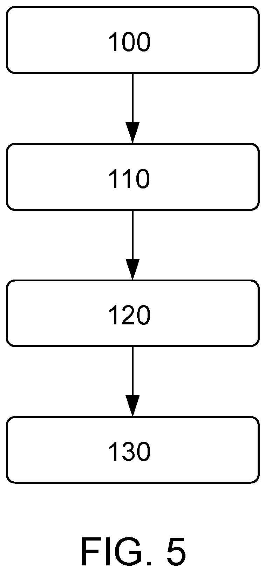

Figs. 1 to 3 show a view of a conveyor with a flow control device comprising a star wheel, Fig. 4 shows a star wheel in a predefined position and Fig. 5 shows a flow chart of the method. The flow control device is primarily intended to be used in conveyor systems adapted for lighter objects, where an object or a loaded pallet may weigh up to a few kg or less, but may with a proper design be suitable for much heavier objects or pallets.

The flow control device 1 comprises a body 2, in the shown example provided with a mounting flange 7 such that the flow control device can easily be mounted to a conveyor beam by the use of a T-slot of the conveyor beam. The body 2 is further provided with a lower flange 8 to which a drive unit 3 is attached. The drive unit 3 may be a standardized drive unit and comprises in the shown example an electric motor 9 and a reduction gear 10. The electric motor may be e.g. a DC-motor or a stepper motor and may comprise a rotational sensor that will detect the rotation of the electric motor and that will enable feedback for the motor driver.

The reduction gear 10 is used to decrease the rotational speed of the electric motor to a rotational speed suitable for the star wheel and that is adapted to the speed of the conveyor track. The reduction gear may be a straight transmission or may be a worm gear. In one example, a self-locking worm gear is used. The reduction gear is attached to the lower flange 8 of the body 2 and may be fixedly attached to the shaft member 4. The shaft member is arranged in the body and rotates around a rotational axis 11. The shaft member is supported by a roller bearing 12 arranged at the upper part of the body 2.

In the shown example, the star wheel 5 is arranged at the upper end of the shaft member 4. In the shown example, a one way clutch is integrated in a roller bearing mounted at the upper end of the shaft member 4. The star wheel 5 is mounted on the roller bearing. Such a combined one way clutch and roller bearing is referred to as a one way bearing 6. This gives a compact and reliable solution. One advantage of using a one way bearing between the shaft member and the star wheel is that the rotating mass is reduced and the friction of the roller bearing supporting the axle member must not be taken account for. It is also possible to mount a one way clutch, e.g. a one way bearing, between the reduction gear 10 and the shaft member 4 at the lower end of the shaft member 4.

The star wheel 5 is provided with a number of tips 14 and part-circular recesses 15 arranged between the tips. The part-circular recesses are adapted to the size of the object or puck that is to be handled by the flow control device. In the shown example, the star wheel is provided with five tips and five part-circular recesses, but other numbers are of course also possible. The size of the star wheel and the number of tips are dependent e.g. on the distance between the conveyor track and the rotational axis 11 and on the size of an object. At each tip, a magnetic member is arranged. In the shown example, the magnetic member is a magnetic insert arranged in a hole of the tip, extending through the material of the star wheel. The magnetic member is made from a magnetic material such as steel or iron. The magnetic member may also be arranged inside the tip by moulding, or may be attached to the outside of the tip.

The flow control device is further provided with a magnet 16 mounted on a magnet holder 17. The magnet holder 17 may e.g. be a bracket attached to the body of the flow control device, or may be mounted in another way. In other words, the magnet holder 17 may be attached to the body 2. The magnet is arranged at the periphery of the star wheel, such that the magnet can interact with a magnetic member of the star wheel. Note that the magnet 16 is not arranged on the star wheel 5. The magnet 16 is arranged such that the star wheel 5 is movable relative to the magnet 16. Consequently, the magnet holder 17 is also arranged such that the star wheel 5 is movable relative to the magnet holder 17. The magnetic force between the magnet and the magnetic member is relatively low, such that the magnet will not affect normal operation of the star wheel. The magnet may be arranged in a fixed position or may be adjustable in a horizontal direction, such that the predefined position of the star wheel can be adjusted if desired. The magnet may also be adjustable in a vertical direction such that the holding force between the magnet and the magnetic member can be adapted to the weight and/or the speed of the objects.

The magnet is arranged to hold the star wheel in a predefined position when the star wheel is arranged to let objects conveyed on the conveyor track pass the flow control device. To set the star wheel in a passing state, the drive unit will rotate the shaft member of the star wheel with a speed equal to or higher than the speed of the conveyor track. In other words, the magnet 16 is arranged to hold the star wheel 5 in the predefined position by magnetic interaction with the magnetic member 13 when the shaft member 4 of the star wheel 5 is rotated with a speed corresponding to a speed equal to or higher than a speed of the conveyor track 41. Without a magnet and without any objects on the conveyor track, this will result in that the periphery of the star wheel rotates with a speed equal to or higher than the speed of the conveyor track. However, due to the one way bearing, the only drive force acting on the star wheel is the friction of the roller bearing of the one way bearing. Thus, if an object arrives at the star wheel, the star wheel will be pushed forwards by the object and will rotate with the same speed as the object.

By dimensioning the magnet and by mounting the magnet sufficiently close to the star wheel, the holding force between the magnet and the magnetic member will be higher than the friction force of the roller bearing of the one way bearing. In this way, the magnet will hold the star wheel in a predefined position. An example of a suitable predefined position is shown in Fig. 4, where one tip of the star wheel is positioned just outside of the conveyor track and where another tip extends over the conveyor track with an offset. This is a preferred position when compared to a position in which a tip extends as far as possible over the conveyor track. The predefined position will also depend on the number of tips of the star wheel.

The advantage of holding the star wheel in a predefined position when no objects arrives at the star wheel is that there is no risk that an object arrives at the star wheel in a position where the star wheel will block the object. Since the star wheel does not provide any power to push the objects forwards, but moves with the flow of the objects, there is a risk that an object will arrive at the star wheel when the star wheel is in an unfavourable orientation where the tip is oriented at a line between the centre of the object and the centre of the star wheel. In such a position, the object may block the star wheel from rotating, and the star wheel may block the object from moving. This may result in a stopped object flow. Holding the star wheel in a predefined position will ensure that such a situation does not occur. When an object arrives at the star wheel positioned in the predefined position, the object will pass the star wheel and will push the star wheel to the next predefined position.

The star wheel may also be provided with a rotational sensor that will provide feedback information to a control system of the conveyor system. The control system will in this way be able to control the throughput of objects by controlling the speed and runtime of the star wheel. In one example, the flow control device is provided with an inductive sensor that detects when a magnetic member passes the sensor. This can e.g. be used to count the number of passing objects.

The flow control device 1 can be arranged to function as a stop member in a conveyor system 40, where the flow control device 1 can stop objects 42 conveyed on a conveyor track 41. Other conveyor systems in which an object is conveyed by gravity may also be used. In the described example, a conveyor system comprising an endless conveyor chain will be used as a conveyor system. An object may be a circular object and may be a freestanding object such as a can, jar or bottle, or may be a pallet having a circular section adapted to interact with the star wheel, referred to as a puck, which can carry a product of some kind. An object may also have other symmetric shapes, such as a hexagonal or octagonal shape, In the described example, a circular puck will be used as an object. A stop function can be performed in different ways. When there is a steady flow of pucks, the star wheel is allowed to rotate with the puck flow. This is done by letting the motor drive the shaft member of the star wheel with the same speed or a higher speed than the speed of the puck flow of the conveyor track. If the shaft member of the star wheel is rotated with a speed higher than the conveyor track, the one way clutch will allow the star wheel to adapt to the speed of the pucks. In a conventional system using a star wheel fixedly attached to the drive unit, it is important that the motor rotates the star wheel with exactly the same speed as the conveyor track in order to allow for the pucks to pass the flow control device.

When the puck flow is to be stopped, the motor is stopped and the puck flow will consequently be stopped and the first puck in the remaining puck train will be held by the star wheel. By using a self-locking reduction gear, there is no need to provide a hold current to the motor. This situation is shown in Fig. 1. Here, a recess holds a puck and the recess is preferably arranged in the same position as shown in Fig. 4, with one tip extending over the conveyor track and the next tip positioned just outside of the conveyor track. However, the puck may be held by the star wheel in any rotational position. When the puck flow should continue, the shaft member of the star wheel is driven by the motor with the same speed as before, such that the flow control device does not restrict the puck flow. The pucks will be driven by the conveyor track and the star wheel will let the pucks pass the flow control device.

The speed of the star wheel is here to be understood as the peripheral speed of the star wheel, i.e. when the periphery of the star wheel moves with the same speed as the conveyor track, the speed of the star wheel is said to equal the speed of the conveyor track.

The flow control device 1 can also stop one or more pucks that arrives at the flow control device individually. When a puck arrives at the star wheel, one of the tips will stop the puck. The puck will be caught by the star wheel and the puck will be held in this position. When a second puck arrives, it will bear against the first puck. When one or more pucks are to be released, the shaft member of the star wheel is driven by the motor such that the star wheel is allowed to rotate with the pucks and can thus release one or more pucks. If only one puck is to be released, the motor will only drive the shaft member of the star wheel part of a revolution.

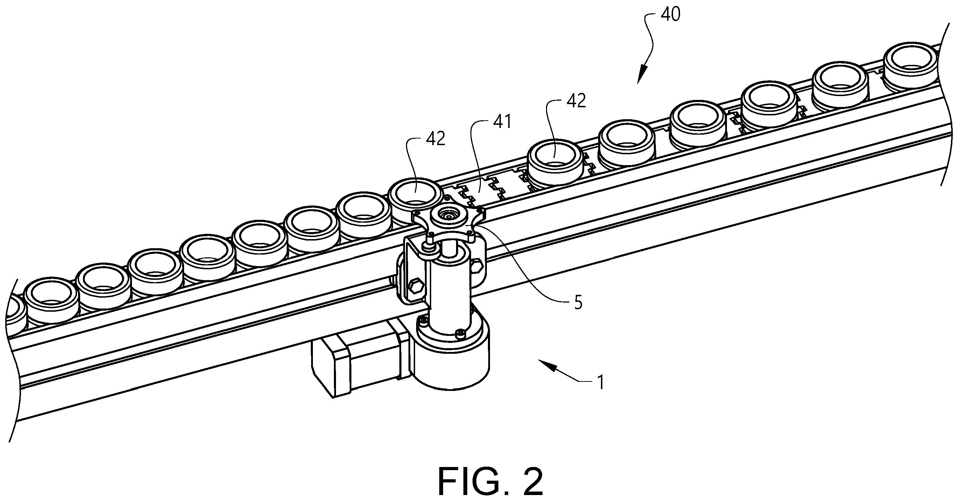

The flow control device 1 is also adapted to space pucks with a predefined distance or to group pucks in groups having a predefined number of pucks. Fig. 2 shows an example where the flow control device releases pucks with a predefined spacing. This is done by driving the shaft member of the star wheel with a speed slower than the speed of the conveyor track. If the shaft member of the star wheel is driven by the motor with half the speed of the conveyor track, the spacing between two pucks will correspond to the length of a puck. By adapting the speed of the motor, the spacing between the pucks can be selected freely.

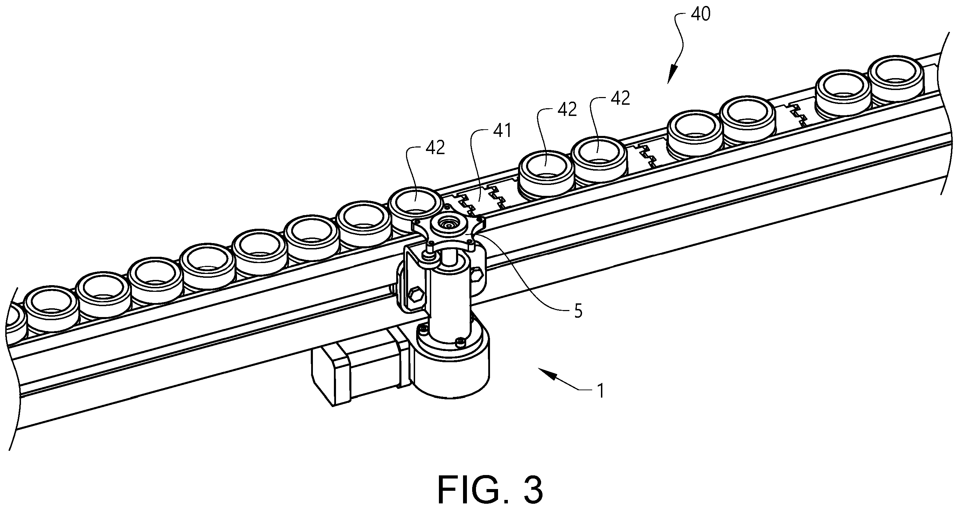

The flow control device 1 is further adapted to group pucks in groups having a desired number of pucks. The size of a group can be predefined or may be adapted to actual requirements of the conveyor system. Fig. 3 shows an example where the flow control device groups pucks in groups of two. This is done by rotating the shaft member of the star wheel such that two pucks are released, and then by stopping the star wheel for a period of time before the shaft member of the star wheel is rotated again to release two new pucks. The size of a group and the spacing between two groups can be selected freely. In this way, groups comprising two, three, four or more pucks can be obtained, and the spacing between the groups can vary. It is also possible to create groups having a varying number of pucks, and to vary the distance between two groups.

Since the flow control device 1 is provided with a one way bearing, a safe flow control device is provided. The star wheel will for this reason not be able to push a puck forwards on the conveyor track, but can only let pucks pass with the speed of the conveyor track or can restrict the speed of pucks passing the flow control device. If the flow of pucks is blocked downstream of the flow control device, the star wheel will disengage from the shaft member and will not be able to release any pucks, while the motor continues to spin with the same speed as before. A conventional star wheel arrangement would continue to drive pucks forwards, which could damage both the star wheel and the pucks.

If a user puts e.g. a finger in the star wheel, the star wheel will also disengage from the shaft member. There is thus no risk for injuries with the inventive flow control device. A user may remove or add pucks to the puck flow without the risk of being caught by the star wheel. In this way, there is no need to use protective covers over and around the flow control device. Since a protective cover may have to extend up to 80 cm or more from the flow control device in each direction, space can be saved. At the same time, it is easy to move a flow control device to a new position or to add a flow control device to a conveyor track.

Fig. 5 shows a schematic flow chart for the method of controlling a flow of objects on a conveyor track by using a flow control device. The objects may be objects conveyed directly on the conveyor track, or may be pucks holding a product.

In step 100, the flow of objects should pass the flow control device uninterrupted, regardless if the objects are arranged in a train of objects, or if the objects arrive one by one with a fixed or random spacing. In this step, the shaft member of the star wheel is rotated by the drive unit with a speed corresponding to a speed equal to or higher than the speed of the conveyor track. In order to release the star wheel from the shaft member, the shaft member rotates faster than the star wheel will rotate when affected by the objects. The star wheel is held in a predefined positon by a magnet arranged at the periphery of the star wheel. When no objects arrive at the flow control device, the star wheel remains in the predefined position. When an object arrives at the flow control device, the star wheel is rotated by the object to a new predefined position, where the star wheel remains until the next object arrives at the flow control device.

In step 110, an object is stopped by the flow control device. To stop an object, the rotation of the star wheel is stopped by stopping the motor of the drive unit when an object is to be stopped by the flow control device. This will stop the star wheel completely from rotating, and an object arriving at the flow control device will be stopped and will be held in this position. To release the object, the motor must rotate the shaft member of the star wheel.

In an additional step 120, the objects are spaced apart from each other with a predefined distance. To provide a spacing, the star wheel is rotated with a speed lower than the speed of the conveyor track. The size of the spacing between objects is controlled by the rotational speed of the shaft member of the star wheel. In one example, the shaft member of the star wheel is driven by the motor with half the speed of the conveyor track. In this example, the spacing between two pucks will correspond to the length of a puck. By adapting the speed of the motor, the spacing between the pucks can be selected freely.

In an additional step 130, the star wheel is disengaged from the shaft member by the one way bearing when the star wheel is stopped by either the objects, e.g. if the objects are stopped by an external force, or by e.g. a hand or a finger. In his case, the motor and thus the shaft member keeps rotating, but the star wheel stands still due to the external force acting on the star wheel. Since this external force must only be higher than the friction of the roller bearing, it is very small and will not damage the object, the hand or the finger.

The invention is not to be regarded as being limited to the embodiments described above, a number of additional variants and modifications being possible within the scope of the subsequent patent claims. The flow control device may have any size and may be made from any suitable material.

### REFERENCE SIGNS

- 1:: Flow control device
- 2:: Body
- 3:: Drive unit
- 4:: Shaft member
- 5:: Star wheel
- 6:: One way bearing
- 7:: Mounting flange
- 8:: Lower flange
- 9:: Electric motor
- 10:: Reduction gear
- 11:: Rotational axis
- 12:: Roller bearing
- 13:: Magnetic insert
- 14:: Tip
- 15:: Part-circular recess
- 16:: Magnet
- 17:: Magnet holder

- 40:: Conveyor system
- 41:: Conveyor track
- 42:: Pallet

## Claims

1. Conveyor system (40) adapted to convey objects (42) on a conveyor track (41), wherein the conveyor system (40) comprises at least one flow control device (1), wherein the flow control device (1) comprises a body (2), a drive unit (3) attached to the body (2), a star wheel (5), a shaft member (4) of the star wheel (5) rotationally arranged in the body (2) and connected to the drive unit (3), wherein the star wheel (5) is arranged to be driven by the drive unit (3), wherein the star wheel (5) is provided with a number of tips (14) and part-circular recesses (15) arranged between the tips (14), wherein a one way bearing (6) is arranged between the star wheel (5) and the drive unit (3), **characterized in that** each tip (14) is provided with a magnetic member (13) and that the flow control device (1) comprises a magnet (16) arranged at the outer periphery of the star wheel (5), wherein the magnet (16) is arranged to hold the star wheel (5) in a predefined position by magnetic interaction with the magnetic member (13), wherein the magnet (16) is arranged to hold the star wheel (5) in the predefined position by magnetic interaction with the magnetic member (13) when the shaft member (4) of the star wheel (5) is rotated with a speed corresponding to a peripheral speed of the star wheel (5) equal to or higher than a speed of the conveyor track (41).

2. Conveyor system (40) according to claim 1, wherein the one way bearing (6) is arranged between the star wheel (5) and the shaft member (4).

3. Conveyor system (40) according to claim 1, wherein the one way bearing (6) is arranged between the shaft member (4) and the drive unit (3).

4. Conveyor system (40) according to any of claims 1 to 3, wherein the star wheel (5) is provided with five tips (14).

5. Conveyor system (40) according to any of claims 1 to 4, wherein a magnetic member (13) is a magnetic insert arranged in a hole of the tip (14).

6. Conveyor system (40) according to any of claims 1 to 4, wherein a magnetic member (13) is a magnetic member attached to the tip (14).

7. Conveyor system (40) according to any of claims 1 to 6, wherein the magnet (16) is adjustable in a horizontal direction.

8. Conveyor system (40) according to any of claims 1 to 7, wherein the magnet (16) is adjustable in a vertical direction.

9. Conveyor system (40) according to any of claims 1-8, wherein the magnet (16) is arranged such that the star wheel (5) is movable relative to the magnet (16).

10. Method for controlling a flow of objects (42) on a conveyor track (41) by using a conveyor system (40) according to claim 1, comprising the steps of:
- rotating the shaft member (4) of the star wheel (5) with a speed corresponding to a peripheral speed of the star wheel (5) equal to or higher than the speed of the conveyor track (41) when the objects (42) are to pass the flow control device (1) uninterrupted, wherein the star wheel (5) is held in a predefined position by the magnet (16), and
- stopping the rotation of the star wheel (5) when an object (42) is to be stopped by the flow control device (1).

11. Method according to claim 10, further comprising the step of disengaging the star wheel (5) from the shaft member (4) with the one way bearing (6) when the objects (42) are stopped by an external force and when the shaft member (4) of the star wheel (5) is rotated with a speed corresponding to a speed equal to or higher than the speed of the conveyor track (41).

12. Method according to claim 10 or 11, further comprising the step of spacing objects (42) by rotating the shaft member (4) of the star wheel (5) with a speed lower than the speed of the conveyor track (41) such that the objects (42) are spaced apart from each other.

13. Method according to any of claims 10 to 12, further comprising the step of grouping objects (42):
- rotating the shaft member (4) of the star wheel (5) with a speed corresponding to a peripheral speed of the star wheel (5) equal to or higher than the speed of the conveyor track (41) until a predefined number of objects (42) has passed the flow control device (1) in order to obtain a group of objects (42),
- stopping the star wheel (5) for a predefined time period in order to create a desired spacing between the groups of objects (42),
- repeating the steps of grouping objects (42).

## Patentansprüche

1. Fördersystem (40), das dazu angepasst ist, Gegenstände (42) auf einer Förderbahn (41) zu fördern, wobei das Fördersystem (40) mindestens eine Durchflussregelungsvorrichtung (1) umfasst, wobei die Durchflussregelungsvorrichtung (1) einen Körper (2), eine an dem Körper (2) angebrachte Antriebseinheit (3), ein Sternrad (5), ein Wellenelement (4) des Sternrads (5), das drehbar in dem Körper (2) angeordnet ist und mit der Antriebseinheit (3) verbunden ist, umfasst, wobei das Sternrad (5) dazu angeordnet ist, durch die Antriebseinheit (3) angetrieben zu werden, wobei das Sternrad (5) mit einer Anzahl von Spitzen (14) und zwischen den Spitzen (14) angeordneten teilkreisförmigen Aussparungen (15) versehen ist, wobei ein Einweglager (6) zwischen dem Sternrad (5) und der Antriebseinheit (3) angeordnet ist, **dadurch gekennzeichnet, dass** jede Spitze (14) mit einem magnetischen Element (13) versehen ist und dass die Durchflussregelungsvorrichtung (1) einen Magneten (16) umfasst, der an dem Außenumfang des Sternrads (5) angeordnet ist, wobei der Magnet (16) dazu angeordnet ist, das Sternrad (5) durch magnetische Wechselwirkung mit dem magnetischen Element (13) in einer vordefinierten Position zu halten, wobei der Magnet (16) dazu angeordnet ist, das Sternrad (5) durch magnetische Wechselwirkung mit dem magnetischen Element (13) in der vordefinierten Position zu halten, wenn das Wellenelement (4) des Sternrads (5) mit einer Geschwindigkeit gedreht wird, die einer Umfangsgeschwindigkeit des Sternrads (5) entspricht, die gleich oder höher als eine Geschwindigkeit der Förderbahn (41) ist.

2. Fördersystem (40) nach Anspruch 1, wobei das Einweglager (6) zwischen dem Sternrad (5) und dem Wellenelement (4) angeordnet ist.

3. Fördersystem (40) nach Anspruch 1, wobei das Einweglager (6) zwischen dem Wellenelement (4) und der Antriebseinheit (3) angeordnet ist.

4. Fördersystem (40) nach einem der Ansprüche 1 bis 3, wobei das Sternrad (5) mit fünf Spitzen (14) versehen ist.

5. Fördersystem (40) nach einem der Ansprüche 1 bis 4, wobei ein Magnetelement (13) ein Magneteinsatz ist, der in einem Loch der Spitze (14) angeordnet ist.

6. Fördersystem (40) nach einem der Ansprüche 1 bis 4, wobei ein Magnetelement (13) ein Magnetelement ist, das an der Spitze (14) angebracht ist.

7. Fördersystem (40) nach einem der Ansprüche 1 bis 6, wobei der Magnet (16) in einer horizontalen Richtung anpassbar ist.

8. Fördersystem (40) nach einem der Ansprüche 1 bis 7, wobei der Magnet (16) in einer vertikalen Richtung anpassbar ist.

9. Fördersystem (40) nach einem der Ansprüche 1-8, wobei der Magnet (16) derart angeordnet ist, dass das Sternrad (5) relativ zu dem Magneten (16) bewegbar ist.

10. Verfahren zum Steuern eines Stroms von Gegenständen (42) auf einer Förderbahn (41) unter Verwendung eines Fördersystems (40) nach Anspruch 1, umfassend die folgenden Schritte:
- Drehen des Wellenelements (4) des Sternrads (5) mit einer Geschwindigkeit, die einer Umfangsgeschwindigkeit des Sternrads (5) entspricht, die gleich oder höher als die Geschwindigkeit der Förderbahn (41) ist, wenn die Gegenstände (42) die Durchflussregelungsvorrichtung (1) ununterbrochen zu passieren haben, wobei das Sternrad (5) durch den Magneten (16) in einer vordefinierten Position gehalten wird, und
- Anhalten der Drehung des Sternrads (5), wenn ein Gegenstand (42) durch die Durchflussregelungsvorrichtung (1) anzuhalten ist.

11. Verfahren nach Anspruch 10, ferner umfassend den Schritt von Lösen des Sternrads (5) von dem Wellenelement (4) mit dem Einweglager (6), wenn die Gegenstände (42) durch eine äußere Kraft angehalten werden und wenn das Wellenelement (4) des Sternrads (5) mit einer Geschwindigkeit gedreht wird, die einer Geschwindigkeit entspricht, die gleich oder höher als die Geschwindigkeit der Förderbahn (41) ist.

12. Verfahren nach Anspruch 10 oder 11, ferner umfassend den Schritt von Beabstanden von Gegenständen (42) durch Drehen des Wellenelements (4) des Sternrads (5) mit einer Geschwindigkeit, die niedriger ist als die Geschwindigkeit der Förderbahn (41), sodass die Gegenstände (42) voneinander beabstandet werden.

13. Verfahren nach einem der Ansprüche 10 bis 12, ferner umfassend den Schritt von Gruppieren von Gegenständen (42):
- Drehen des Wellenelements (4) des Sternrads (5) mit einer Geschwindigkeit, die einer Umfangsgeschwindigkeit des Sternrads (5) entspricht, die gleich oder höher als die Geschwindigkeit der Förderbahn (41) ist, bis eine vordefinierte Anzahl von Gegenständen (42) die Durchflussregelungsvorrichtung (1) passiert hat, um eine Gruppe von Gegenständen (42) zu erlangen,
- Anhalten des Sternrads (5) für einen vordefinierten Zeitraum, um einen gewünschten Abstand zwischen den Gruppen von Gegenständen (42) zu schaffen,
- Wiederholen der Schritte von Gruppieren von Gegenständen (42).

## Revendications

1. Système de transport (40) adapté pour transporter des objets (42) sur une piste de transport (41), dans lequel le système de transport (40) comprend au moins un dispositif de régulation de débit (1), dans lequel le dispositif de régulation de débit (1) comprend un corps (2), une unité d'entraînement (3) fixée au corps (2), une roue en étoile (5), un élément d'arbre (4) de la roue en étoile (5) agencé en rotation dans le corps (2) et relié à l'unité d'entraînement (3), dans lequel la roue en étoile (5) est agencée pour être entraînée par l'unité d'entraînement (3), dans lequel la roue en étoile (5) est pourvue d'un certain nombre de pointes (14) et d'évidements partiellement circulaires (15) agencés entre les pointes (14), dans lequel un roulement unidirectionnel (6) est agencé entre la roue en étoile (5) et l'unité d'entraînement (3), **caractérisé en ce que** chaque pointe (14) est pourvue d'un élément magnétique (13) et **en ce que** le dispositif de régulation de débit (1) comprend un aimant (16) agencé à la périphérie extérieure de la roue en étoile (5), dans lequel l'aimant (16) est agencé pour maintenir la roue en étoile (5) dans une position prédéfinie par interaction magnétique avec l'élément magnétique (13), dans lequel l'aimant (16) est agencé pour maintenir la roue en étoile (5) dans la position prédéfinie par interaction magnétique avec l'élément magnétique (13) lorsque l'élément d'arbre (4) de la roue en étoile (5) est mis en rotation à une vitesse correspondant à une vitesse périphérique de la roue en étoile (5) égale ou supérieure à une vitesse de la piste de transport (41).

2. Système de transport (40) selon la revendication 1, dans lequel le roulement unidirectionnel (6) est agencé entre la roue en étoile (5) et l'élément d'arbre (4).

3. Système de transport (40) selon la revendication 1, dans lequel le roulement unidirectionnel (6) est agencé entre l'élément d'arbre (4) et l'unité d'entraînement (3).

4. Système de transport (40) selon l'une quelconque des revendications 1 à 3, dans lequel la roue en étoile (5) est pourvue de cinq pointes (14).

5. Système de transport (40) selon l'une quelconque des revendications 1 à 4, dans lequel un élément magnétique (13) est un insert magnétique agencé dans un trou de la pointe (14).

6. Système de transport (40) selon l'une quelconque des revendications 1 à 4, dans lequel un élément magnétique (13) est un élément magnétique fixé à la pointe (14).

7. Système de transport (40) selon l'une quelconque des revendications 1 à 6, dans lequel l'aimant (16) est réglable dans une direction horizontale.

8. Système de transport (40) selon l'une quelconque des revendications 1 à 7, dans lequel l'aimant (16) est réglable dans une direction verticale.

9. Système de transport (40) selon l'une quelconque des revendications 1 à 8, dans lequel l'aimant (16) est agencé de de sorte que la roue en étoile (5) est mobile par rapport à l'aimant (16).

10. Procédé pour réguler un débit d'objets (42) sur une piste de transport (41) en utilisant un système de transport (40) selon la revendication 1, comprenant les étapes consistant à :
- réaliser la rotation de l'élément d'arbre (4) de la roue en étoile (5) avec une vitesse correspondant à une vitesse périphérique de la roue en étoile (5) égale ou supérieure à la vitesse de la piste de transport (41) lorsque les objets (42) doivent passer le dispositif de régulation de débit (1) de manière ininterrompue, dans lequel la roue en étoile (5) est maintenue dans une position prédéfinie par l'aimant (16), et
- arrêter la rotation de la roue en étoile (5) lorsqu'un objet (42) doit être arrêté par le dispositif de régulation de débit (1).

11. Procédé selon la revendication 10, comprenant en outre l'étape consistant à désolidariser la roue en étoile (5) de l'élément d'arbre (4) avec le roulement unidirectionnel (6) lorsque les objets (42) sont arrêtés par une force externe et lorsque l'élément d'arbre (4) de la roue en étoile (5) est mis en rotation à une vitesse correspondant à une vitesse égale ou supérieure à la vitesse de la piste de transport (41).

12. Procédé selon la revendication 10 ou 11, comprenant en outre l'étape consistant à espacer des objets (42) en réalisant la rotation de l'élément d'arbre (4) de la roue en étoile (5) avec une vitesse inférieure à la vitesse de la piste de transport (41) de sorte que les objets (42) sont espacés les uns des autres.

13. Procédé selon l'une quelconque des revendications 10 à 12, comprenant en outre l'étape consistant à grouper des objets (42) :
- réaliser la rotation de l'élément d'arbre (4) de la roue en étoile (5) avec une vitesse correspondant à une vitesse périphérique de la roue en étoile (5) égale ou supérieure à la vitesse de la piste de transport (41) jusqu'à ce qu'un nombre prédéfini d'objets (42) ait passé le dispositif de régulation de débit (1) afin d'obtenir un groupe d'objets (42),
- arrêter la roue en étoile (5) pendant une période de temps prédéfinie afin de créer un espacement souhaité entre les groupes d'objets (42),
- répéter les étapes de groupement d'objets (42).
